# EUROPÄISCHE PATENTSCHRIFT

(11) **EP 3 292 995 B1**
(45) Veröffentlichungstag und Bekanntmachung des Hinweises auf die Patenterteilung: **30.03.2022**
(21) Anmeldenummer: 16187661.0
(22) Anmeldetag: 07.09.2016
(51) Int. Cl.: B30B 5/06, B27N 1/02, B27N 3/24, G01N 25/72

(54) **HOLZWERKSTOFFPLATTEN-HEISSPRESSE UND VERFAHREN ZUM BETREIBEN EINER HOLZWERK-STOFFPLATTEN-HEISSPRESSE**
WOOD MATERIAL PANEL HOT PRESS AND METHOD FOR OPERATING A WOOD MATERIAL PANEL HOT PRESS
PRESSE A CHAUD POUR PLAQUES EN BOIS ET SON PROCEDE DE FONCTIONNEMENT

(43) Veröffentlichungstag der Anmeldung: 14.03.2018
(73) Patentinhaber: SWISS KRONO Tec AG, 6004 Luzern (CH)
(72) Erfinder: Dröge, Peter, 19322 Wittenberge (DE)
(74) Vertreter: Plöger, Jan Manfred

(56) Entgegenhaltungen:
- EP-A1- 1 526 377
- EP-A1- 2 927 003
- EP-A1- 2 977 157
- WO-A1-2009/071738
- WO-A2-01/35086
- DE-C1- 3 907 617
- US-A1- 2001 042 834
- P Meinlschmidt: "Thermographic detection of defects in wood and wood-based materials", 14th symposium of nondestructive testing of wood, Hannover, Germany, May 2nd-4th, 2005, 4. Mai 2005 (2005-05-04), XP055056073, Gefunden im Internet: URL:http://www.ndt.net/article/v11n01/mein lschmidt/meinlschmidt.pdf [gefunden am 2013-03-12]
- H Berglind ET AL: "Detection of glue deficiency in laminated wood with pulse thermography", Journal of Wood Science, 30. Juni 2003 (2003-06-30), Seiten 216-220, XP055056079, DOI: 10.1007/s10086-002-0478-6 Gefunden im Internet: URL:http://download.springer.com/static/pd f/861/art%3A10.1007%2Fs10086-002-0478-6.pd f?auth66=1364374535_1fd19d0751ba34671c4eae 89015463b9&ext=.pdf [gefunden am 2013-03-12]

## Beschreibung

Die Erfindung betrifft eine Holzwerkstoffplatten-Heißpresse gemäß dem Oberbegriff von Anspruch 1. Gemäß einem zweiten Aspekt betrifft die Erfindung ein Verfahren zum Betreiben einer solchen Holzwerkstoffplatten-Heißpresse.

Derartige Holzwerkstoffplatten-Heißpressen werden, beispielsweise bei der Herstellung von HDF-Platten, dazu verwendet, um einen Faserkuchen zur Holzwerkstoffplatte zu verpressen. Derartige Heißpressen arbeiten kontinuierlich, werden aber angehalten, wenn beispielsweise ein Schaden zu reparieren ist oder wenn eine Holzwerkstoffplatte mit einer abweichenden Plattendicke herstellt werden soll.

Es ist wünschenswert, eine derartige Heißpresse mit höchstmöglicher Geschwindigkeit betreiben zu können. Bei einer zu hohen Vorschubgeschwindigkeit kommt es jedoch zu Fehlern in der produzierten Holzwerkstoffplatte. Beispielsweise können oberflächennahe Materialfehler, sogenannte Spalter, entstehen, die dadurch hervorgerufen werden, dass Dampfblasen in der entstehenden Holzwerkstoffplatte entstehen und Material mit sich reißen. Die optimalen Prozessparameter zum Betreiben einer derartigen Holzwerkstoffplatten-Heißpresse werden von den Maschinenfahrern anhand von Erfahrungswerten gewählt. Ob auf diese Weise die optimale Vorschubgeschwindigkeit erreicht werden kann, ist nicht bekannt.

Es ist vorgeschlagen worden, den Ausschuss beim Anfahren dadurch zu vermindern, dass nicht die Temperatur eines Pressbands der Holzwerkstoffplatten-Heißpresse geregelt wird, sondern die Heizleistung, die von der Heißpresse abgegeben wird. Dieses Vorgehen verringert den Ausschuss zwar, eine weitere Reduktion des Ausschusses ist aber wünschenswert.

Aus der EP 1 526 377 A1 ist eine gattungsgemäße Holzwerkstoffplatten-Heißpresse gemäß dem Oberbegriff des Anspruchs 1 bekannt. Die Thermokamera wird dazu verwendet, schadhafte Holzwerkstoffplatten zu identifizieren und auszusondern oder die Geschwindigkeit, mit der die Heißpresse arbeitet, zu überwachen. Dazu werden mit der Infrarotkamera aufgenommene Thermogramme mit Referenz-Thermogrammen verglichen. Auf diese Weise kann zwar verhindert werden, dass fehlerhafte Holzwerkstoffplatten weiterverarbeitet werden und dass Ausschuss aufgrund einer falschen Flussgeschwindigkeit vermieden werden kann. Es hilft, die Ausschussrate weiter zu senken. Aus der WO 01/35086 A2 ist eine Vorrichtung für die berührungslose Untersuchung von Prüfkörpern bekannt, bei der eine Thermografiekamera zum Detektieren von Oberflächenimperfektionen eingesetzt wird.

In dem Aufsatz von P. Meinlschmidt "Thermgraphic detection of defects in wood and wood-based materials", 14th international symposium of nondestructive testing of wood, Hannover, Germany, 2. bis 4. Mai 2005, ist beschrieben, dass Thermografie zur Detektion von Defekten in Holzwerkstoffplatten eingesetzt werden kann.

In der US 2001/0042834 A1 ist beschrieben, wie Defekte dadurch erkannt werden können, dass ein computergeneriertes Modell nach Aufnahme eines ersten Bildes erstellt wird. Die Unterschiede zwischen einem zweiten aufgenommenen Bild und den Ergebnissen, die auf Basis des Modells errechnet werden, werden miteinander verglichen.

Aus der EP 2 927 003 A1 ist bekannt, die räumliche Temperaturverteilung zu erfassen, um bei einem nachfolgenden Bedrucken ein Druckbild zu erhalten, das sich mit der Zeit möglichst wenig ändert. Ein derartiges Verfahren ist geeignet, um etwaige Inhomogenitäten in der Temperaturverteilung nachträglich auszugleichen, nicht aber, diese zu vermeiden.

Der Erfindung liegt die Aufgabe zugrunde, die Herstellung von Holzwerkstoffplatten zu verbessern.

Die Erfindung löst das Problem durch eine Holzwerkstoffplatten-Heißpresse mit den Merkmalen von Anspruch 1.

Der Erfindung liegt die Erkenntnis zugrunde, dass die Oberflächentemperatur der Holzwerkstoffplatte an der Auslaufseite die thermischen und mechanischen Vorgänge innerhalb der Holzwerkstoffplatten-Heißpresse so genau charakterisiert, dass sie zum Regeln der Verfahrensparameter der Holzwerkstoffplatten-Heißpresse ausreicht. Das ist insoweit überraschend, als bereits aus dem Stand der Technik seit langem bekannt ist, die Temperatur innerhalb der Holzwerkstoffplatten-Heißpresse zu erfassen. Es hat sich jedoch herausgestellt, dass die bislang verwendeten Temperatursensoren nicht in der Lage sind, ein für die Regelung verwendbares Signal zu liefern. So befinden sich bekannte Temperatursensoren in einem relativ großen Abstand von der Oberfläche der entstehenden Holzwerkstoffplatte. In anderen Worten wird im Stand der Technik nicht die Temperatur auf der Oberfläche der Holzwerkstoffplatte gemessen, sondern eine Temperatur der Presse selbst. Ändert sich der Wärmeübergang von der Presse in die Holzwerkstoffplatte, so verändert dies die Eigenschaften der Holzwerkstoffplatte, auch wenn die Temperatur der Holzwerkstoffplatten-Heißpresse konstant bleibt.

Es hat sich zudem überraschend herausgestellt, dass die Oberfläche der Holzwerkstoffplatte an der Auslaufseite lokal stark differierende Temperaturen aufweisen kann. Es ist daher bei Holzwerkstoffplatten-Heißpressen aus dem Stand der Technik möglich, dass sich die im Inneren an einer Stelle gemessene Temperatur nicht ändert, wohl aber die Verteilung der Temperatur in der Holzwerkstoffplatte und damit die (lokale) Fehlerhäufigkeit.

Es wurde herausgefunden, dass die Temperatur, insbesondere die Oberflächentemperatur, der Holzwerkstoffplatte an der Auslaufseite einen so weitgehenden Einblick in die Druck- und Temperaturverhältnisse in der Holzwerkstoffplatten-Heißpresse gestattet, dass weitere Messgrößen für die Regelung der Holzwerkstoffplatten-Heißpresse entbehrlich sind. Zwar ist es möglich, weitere Messgrößen zur Regelung zu verwenden, das ist aber nicht notwendig. So ist es vorteilhafterweise möglich, Temperaturunterschiede auf der Oberfläche der Holzwerkstoffplatte durch Regelung zumindest eines Prozessparameters auszugleichen. Dadurch wird die Homogenität der Holzwerkstoffplatte entlang ihrer Breitenrichtung erhöht, also verbessert. Damit kann die Holzwerkstoffplatten-Heißpresse mit einer höheren Vorschubgeschwindigkeit gefahren werden, bis es zu Fehlern in der Holzwerkstoffplatte kommt.

Da die Temperatur der Holzwerkstoffplatte direkt gemessen wird, kann zudem, wie gemäß einer bevorzugten Ausführungsform vorgesehen, durch einen Vergleich dieser Temperaturen mit einer Soll-Temperatur festgestellt werden, ob der Wärmeübergang von der Holzwerkstoffplatten-Heißpresse in die entstehende Holzwerkstoffplatte in einem vorgegebenen Ziel-Intervall liegt. Weicht beispielsweise die über die Breite gemittelte Ist-Temperatur der Holzwerkstoffplatte um mehr als einen vorgegebenen Schwellenwert von der mittels einer bevorzugt vorhandenen Pressbandtemperatur-Messvorrichtung gemessenen Pressband-Temperatur eines Pressbands der Holzwerkstoffplatten-Heißpresse ab, so kann ein Warnsignal ausgegeben werden. Dies deutet nämlich darauf hin, dass der Wärmeübergang von der Heißpresse in die entstehende Holzwerkstoffplatte gestört ist. Dem kann beispielsweise dadurch entgegengewirkt werden, dass die Vorschubgeschwindigkeit vermindert wird. Alternativ oder zusätzlich kann eine Feuchtigkeit des Faserkuchens verringert werden, beispielsweise dadurch, dass ein Besprühen mit einer Flüssigkeit verringert oder unterbunden wird.

Wenn die Temperatur berührungslos gemessen wird, spielen Kontaktbedingungen zwischen einem Temperatursensor und der Holzwerkstoffplatte keine Rolle. Die Messung ist daher besonders genau. Es hat sich zudem herausgestellt, dass sich die Oberflächeneigenschaften der Holzwerkstoffplatte so wenig ändern, dass eine berührungslose Messung, beispielweise mit einer Infrarot-Kamera, nur eine geringe systematische Messunsicherheit besitzt.

Im Rahmen der vorliegenden Beschreibung wird unter der Holzwerkstoffplatte insbesondere eine Holzfaserplatte, eine HDF-Platte, eine OSB-Platte oder eine Spanplatte verstanden. Besonders günstig ist es, wenn der Faserkuchen kontinuierlich zugeführt wird. In anderen Worten ist es günstig, wenn die Holzwerkstoffplatten-Heißpresse eine kontinuierliche Presse ist.

Unter der Temperaturmessvorrichtung wird insbesondere eine Vorrichtung verstanden, mittels der ein Messwert generierbar ist, der zu der Temperatur, insbesondere der Oberflächentemperatur, der Holzwerkstoffplatte so korreliert, dass aus ihm auf die Temperatur geschlossen werden kann. Es ist möglich, nicht aber notwendig, dass die Temperaturmessvorrichtung zum Messen der Temperatur bezüglich einer Temperaturskala ausgebildet ist. Zwar ist es besonders günstig, wenn die Temperaturmessvorrichtung die Temperatur in Kelvin, Grad Celsius oder in Bezug auf eine andere Temperaturskala, angibt. Es ist aber auch möglich, dass lediglich eine Temperaturänderung zu einer vorgegebenen Referenz-Temperatur gemessen wird, beispielsweise der Temperatur des Faserkuchens an der Einlaufseite oder einer beliebigen, aber fest gewählten Bezugstemperatur. Es ist zudem ausreichend, dass ein beispielsweise elektrisch oder kodiert vorliegendes Temperatursignal vorliegt. So kann die Temperatur beispielsweise durch eine elektrische Spannung, einen Widerstand oder eine Wellenlänge der höchsten spektralen Leistungsdichte dargestellt sein.

Unter berührungslosem Messen wird verstanden, dass kein physischer Kontakt zwischen der Holzwerkstoffplatte und dem Messgerät notwendig ist, um die Temperatur zu bestimmen.

Unter ortsaufgelöstem Messen wird verstanden, bei dem zumindest drei, vorzugsweise zumindest fünf, insbesondere zumindest zehn Messwerte entlang einer Breitenausdehnung der Holzwerkstoffplatte aufgenommen werden. Es ist günstig und stellt eine bevorzugte Ausführungsform dar, dass zumindest eine Stelle existiert, an der bezüglich einer Materialflussrichtung der Holzwerkstoffplatte durch die Holzwerkstoffplatten-Heißpresse zwei oder mehr Temperaturmesswerte hintereinander aufgenommen werden. Es ist möglich und bevorzugt, über zumindest zwei, vorzugsweise mehr, auf diese Weise hintereinander gemessene Temperaturen zu mitteln, um einen zeitlich weniger schwankenden Messwert für die Temperatur zu erhalten.

Vorzugsweise ist die Temperaturmessvorrichtung ausgebildet zum ortsaufgelösten Messen der Temperatur über zumindest 80%, insbesondere zumindest 90%, vorzugsweise 100% der vollen Breite der Holzwerkstoffplatte.

Unter dem Verfahrensparameter wird insbesondere ein veränderbarer Maschinen-Parameter verstanden, der die Temperatur und/oder die Temperaturverteilung der Holzwerkstoffplatte an der auslaufseitigen Seite beeinflusst. Beispielsweise ist der Verfahrensparameter die Vorschubgeschwindigkeit des Faserkuchens, die Heizleistung zumindest eines Heizkreises oder der Pressdruck. Der Verfahrensparameter kann ein Vektor, also ein geordnetes n-Tupel, sein, beispielsweise der Vektor, der (i) den Pressdruck an unterschiedlichen Stellen der Heißpresse und/oder (ii) die Heizleistung der Heizkreise und/oder (iii) zumindest eine Lage eines Rahmens, an dem das Pressband oder eine auf das Pressband eine Kraft übertragende Vorrichtung befestigt ist, und/oder (iv) eine Lage einer Presskraft auf das Pressband übertragenden Komponente relativ zum Rahmen enthält.

Gemäß einer bevorzugten Ausführungsform ist die Temperaturmessvorrichtung ausgebildet zum kontinuierlichen Messen der Temperatur. Hierunter wird insbesondere verstanden, dass die Temperatur wiederholt gemessen wird. Insbesondere ist die Temperaturmessvorrichtung eingerichtet zum automatischen Aufnehmen von Temperaturmesswerten zumindest alle zehn Sekunden, vorzugsweise alle fünf Sekunden, insbesondere zumindest einmal pro Sekunde. Als besonders günstig hat es sich herausgestellt, wenn zumindest fünfmal pro Sekunde Temperaturmesswerte aufgenommen werden. Das erlaubt eine schnelle Reaktion auf etwaige Änderungen der Temperatur.

Unter einem verzögerungsarmen Messen der Temperatur wird verstanden, dass zwischen dem Beginn des Messvorgangs und dem Vorliegen des Messergebnisses die Hälfte der Zeit vergeht, die ein Volumenelement für den Weg durch die Holzwerkstoffplatten-Heißpresse benötigt, wobei insbesondere höchstens zehn Sekunden vergehen, vorzugsweise höchstens eine Sekunde vergeht. In anderen Worten gibt die gemessene Temperatur in sehr guter Näherung die momentane Temperatur der Holzwerkstoffplatte wieder und nicht etwa eine Temperatur, die die Holzwerkstoffplatte vor längerer Zeit hatte. In wiederum anderen Worten ist die Temperaturmessvorrichtung zum Messen der Temperatur so ausgebildet, das die Temperaturmessung in hinreichend guter Näherung als instantan angesehen werden kann.

Unter dem Merkmal, dass die Temperaturmessvorrichtung zum Messen der Temperatur an der Auslaufseite ausgebildet ist, wird insbesondere verstanden, dass ein Abstand zwischen der Stelle, an der die Wärmeübertragung von der Heißpresse auf die Holzwerkstoffplatte endet, und der ersten Stelle in Materialflussrichtung, an der die Temperatur gemessen wird, höchstens 2 m, vorzugsweise höchstens 1 m, beträgt. Je größer der Abstand zwischen der Heißpresse und dem Ort, an dem die Temperatur gemessen wird, desto größer ist der Einfluss beispielsweise der Konvektion auf das Messergebnis, sodass die Aussagekraft eines in einem großen Abstand gewonnenen Messergebnisses geringer ist, was unerwünscht ist.

Die Temperaturmessvorrichtung umfasst eine Infrarot-Kamera. Diese Infrarot-Kamera ist beispielsweise eine Videokamera, die ausgebildet ist zum Aufnehmen von mehreren Bildern pro Sekunde. Der Vorteil einer Infrarot-Kamera ist, dass mit einem Messvorgang eine Vielzahl an einzelnen Temperaturmesspunkten aufgenommen werden kann. Vorzugsweise ist die Infrarot-Kamera eine CCD-Kamera, die einen entsprechenden CCD-Chip aufweist. Dieser CCD-Chip besitzt vorzugsweise zumindest 200 x 50 Pixel. Mit einer Infrarot-Kamera kann die Temperatur der Holzwerkstoffplatte schnell mit hoher Genauigkeit prozesssicher ermittelt werden.

Die Holzwerkstoffplatten-Heißpresse besitzt eine Steuereinheit, die ausgebildet ist zum automatischen Durchführen eines Verfahrens mit den Schritten (a) Erfassen einer ersten Seiten-Temperatur an einer ersten Stelle in einem linken Seitenbereich der Holzwerkstoffplatte, (b) Erfassen einer zweiten Seiten-Temperatur einer von der zweiten Stelle in einem rechten Seitenbereich der Holzwerkstoffplatte und (c) einem Verändern zumindest eines Prozessparameters der Heißpresse, sodass sich die erste Seiten-Temperatur der zweiten Seiten-Temperatur annähert und sich insbesondere eine Differenz der beiden Temperaturen betragsmäßig verkleinert. Es hat sich herausgestellt, dass lokale Temperaturunterschiede zu Materialfehlern führen können, beispielsweise zu Dampfblasen.

Das Verändern des Prozessparameters ist ein Erhöhen eines Pressdrucks auf der Seite der niedrigen Temperatur. Wird nämlich der Pressdruck erhöht, so verbessert sich die Wärmeübertragung von der Holzwerkstoffplatten-Heißpresse, insbesondere von einem umlaufenden Pressband, auf die Holzwerkstoffplatte, sodass die Temperatur der Holzwerkstoffplatte steigt. Dass das Verändern des Pressdrucks die Temperatur der Holzwerkstoffplatte maßgeblich beeinflusst, ist überraschend, da zunächst davon ausgegangen wurde, dass der Pressdruck bereits bei normalem Betrieb so groß ist, dass eine Veränderung des Pressdrucks zu keiner signifikanten Änderung der Wärmeübertragung führt.

Alternativ oder zusätzlich zum Erhöhen des Pressendrucks auf der Seite der niedrigen Temperaturen kann das Verändern des Prozessparameters ein Erniedrigen des Pressdrucks auf der Seite der höheren Temperatur umfassen.

Vorzugsweise besitzt die Holzwerkstoffplatten-Heißpresse eine Heizvorrichtung, mittels der ein umlaufendes Pressband der Holzwerkstoffplatten-Heißpresse in Breitenrichtung lokal unterschiedlich heizbar ist. Insbesondere besitzt die Heizvorrichtung zumindest zwei, vorzugsweise drei nebeneinander angeordnete Heizzonen, die auf verschiedene Temperaturen steuerbar oder regelbar sind.

In anderen Worten kann das Verändern des Prozessparameters ein Erhöhen des Pressdrucks auf der Seite der niedrigen Temperatur relativ zum Pressdruck auf der Seite der höheren Temperatur umfassen. Zusätzlich kann das Verändern des Prozessparameters ein lokales Erhöhen der Heizleistung P und/oder der Temperatur T auf der Seite der niedrigen Temperatur im Vergleich zu der Seite der höheren Temperatur sein oder umfassen. Selbstverständlich ist es möglich, dass zwei oder mehr Prozessparameter so verändert werden, dass sich die erste Seiten-Temperatur der zweiten Seiten-Temperatur annähert.

Unter dem linken Seitenbereich wird insbesondere der Bereich verstanden, der sich von der in Materialflussrichtung linken Seite der Holzwerkstoffplatte bis zum 0,4-fachen, insbesondere zum 0,33-fachen, der Breite der Holzwerkstoffplatte erstreckt. Entsprechend ist der rechte Seitenbereich insbesondere der Bereich der Holzwerkstoffplatte, der sich vom rechten Rand bis zum 0,4-fachen, insbesondere zum 0,33-fachen, der Seitenbreite erstreckt.

Gemäß einer bevorzugten Ausführungsform umfasst das Verfahren die Schritte eines Vergleichens einer mittels der Temperaturmessvorrichtung gemessenen Ist-Temperatur mit einer vorgegebenen Soll-Temperatur und eines Erhöhens einer Vorschubgeschwindigkeit des Faserkuchens, wenn die Ist-Temperatur um eine vorgegebene Differenz-Temperatur oberhalb der Soll-Temperatur liegt und/oder eines Senkens der Vorschubgeschwindigkeit, wenn die Ist-Temperatur um eine vorgegebene zweite Differenz-Temperatur unterhalb der Soll-Temperatur liegt. Liegt die Ist-Temperatur weder um zumindest die vorgegebene Differenz-Temperatur oberhalb der Soll-Temperatur noch um die vorgegebene zweite Differenz-Temperatur unterhalb der Soll-Temperatur, so bleibt die Vorschubgeschwindigkeit vorzugsweise unverändert.

Alternativ oder zusätzlich wird die Heizleistung und/oder die Temperatur der Heißpresse, insbesondere des Pressbands, verringert, wenn die Ist-Temperatur um die vorgegebene Differenz-Temperatur oberhalb der Soll-Temperatur liegt, wobei die Heizleistung und/oder die Temperatur vorzugsweise erhöht wird, wenn die Ist-Temperatur um die vorgegebene zweite Differenz-Temperatur unterhalb der Soll-Temperatur liegt.

Günstig ist es, wenn die Vorschubgeschwindigkeit zumindest auch anhand der über die Breite der Holzwerkstoffplatte gemittelten Temperatur geregelt wird. Selbstverständlich ist es möglich, dass für die Regelung der Vorschubgeschwindigkeit und die Regelung der Heizleistung bzw. der Temperatur der Heißpresse unterschiedliche Differenztemperaturen verwendet werden, bevor ein Regeleingriff erfolgt.

Günstig ist es, wenn die erste Differenz-Temperatur und/oder die zweite Differenz-Temperatur höchstens 5 Kelvin beträgt. Besonders günstig ist es, wenn die Summe der Beträge der Differenz-Temperatur höchstens 5 Kelvin beträgt, insbesondere höchstens 3 Kelvin. Es ist daher möglich, die Temperatur der Holzwerkstoffplatte in einem engen Temperaturbereich zu halten. Es kommt daher zu weniger Ausschuss.

Vorzugsweise liegt die Soll-Temperatur zwischen 100°C und 110°C, insbesondere 102°C und 108°C, wenn die Plattendicke zwischen 5 und 6 Millimeter beträgt. Liegt die Plattendicke zwischen 7 und 8 Millimeter, liegt die Soll-Temperatur vorzugsweise zwischen 121°C und 131°C, vorzugsweise zwischen 123°C und 129°C. Es hat sich herausgestellt, dass so besondere hochqualitative Holzwerkstoffplatten hergestellt werden können.

Vorzugsweise ist die Holzwerkstoffplatten-Heißpresse zum Herstellen einer Holzwerkstoffplatte mit einer Plattendicke von zumindest 2,5 Millimeter, insbesondere zumindest 3,0 Millimeter, vorzugsweise zumindest 5 Millimeter, ausgebildet. Insbesondere ist die Holzwerkstoffplatten-Heißpresse zum Herstellen einer Holzwerkstoffplatte mit einer Plattendicke von höchstens 8 Millimeter, insbesondere höchstens 12 Millimeter, vorzugsweise höchstens 38 Millimeter, ausgebildet. Bei dünnen Holzwerkstoffplatten, insbesondere mit einer Plattendicke zwischen 5 und 8 Millimeter, bei denen es sich vorzugsweise um eine HDF-Platte handelt, kommt es bei einer falschen Wahl der Prozessparameter besonders schnell zu Ausschuss. Die Erfindung ist daher bei der Produktion dieser Art von Holzwerkstoffplatten besonders vorteilhaft. Erfindungsgemäß ist zudem eine Holzwerkstoffplatten-Herstellvorrichtung mit einer erfindungsgemäßen Holzwerkstoffplatten-Heißpresse und einer in Materialflussrichtung hinter der Holzwerkstoffplatten-Heißpresse angeordneten Säge und/oder Besäumanlage.

Erfindungsgemäß ist die Steuereinheit eingerichtet zum automatischen Durchführen eines erfindungsgemäßen Verfahrens.

Günstig ist es, wenn die in dieser Beschreibung genannten Verfahrensschritte beim Pressenanlauf nach einem Stillstand und/oder nach einer Produktumstellung von einem Holzwerkstoffplatten-Format auf ein anderes durchgeführt werden.

Ein derartiges erfindungsgemäßes Verfahren umfasst bevorzugt die Schritte eines Berechnens eines Ungleichheitsparameters, insbesondere einer Differenz zwischen einer Maximal-Temperatur und einer Minimal-Temperatur der Holzwerkstoffplatte. Der Ungleichheitsparameter ist ein Maß für die Inhomogenität der Temperatur der Holzwerkstoffplatte an der Auslaufseite. Beispielsweise wird der Ungleichheitsparameter aus der ortsaufgelöst gemessenen Temperatur T(y) bestimmt, wobei die y-Koordinate quer zur Materialflussrichtung gemessen wird.

Der Ungleichheitsparameter kann beispielsweise die Varianz oder die Standardabweichung der Temperaturverteilung in Breitenrichtung sein. Der Ungleichheitsparameter kann beispielsweise auch die Differenz zwischen einer Maximal- und der Minimal-Temperatur der Holzwerkstoffplatte sein. Die zur Berechnung des Ungleichheitsparameters verwendeten Daten können aus den gemessenen Roh-Temperaturdaten durch zeitliche und/oder räumliche Mitteilung über einen vorgegebenen Bereich erhalten worden sein.

Vorzugsweise umfasst das Verfahren den Schritt eines Ausgebens eines Warnsignals, wenn die Differenz betragsmäßig einen vorgegebenen Warn-Schwellenwert überschreitet.

Es ist möglich, nicht aber notwendig, dass dieses Warnsignal von einem Menschen wahrnehmbar ist. Es ist insbesondere auch möglich, dass das Warnsignal rein elektrisch ist. Es ist wiederum möglich, nicht aber notwendig, dass aufgrund des Warnsignals zumindest ein Prozessparameter der Holzwerkstoffplatten-Heißpresse so geändert wird, dass sich der Ungleichheitsparameter vermindert. Das kann beispielsweise ein örtliches Verändern des Pressendrucks und/oder ein örtliches Verändern der Heizleistung und/oder der Temperatur der Heißpresse sein.

Vorzugsweise umfasst das Verfahren die Schritte (i) Erfassen einer Inhomogenität des Pressbands und (ii) Unterdrücken des Ausgebens des Warnsignals, wenn der Warn-Schwellenwert aufgrund der Inhomogenität überschritten wird. Eine solche Inhomogenität entsteht beispielsweise durch die Reparatur des Pressbands durch Heraustrennen und Ersetzen eines fehlerhaften Bereichs. Im Bereich der Fügestelle zwischen ausgetauschtem Bereich und dem verbliebenen Rest des Pressbands ergibt sich ein veränderter Wärmeübergang vom Pressband in den Faserkuchen, der sich in der lokalen Temperatur der Holzwerkstoffplatte zeigt. Es ergibt sich ein charakteristisches Temperaturmuster, das einmal pro Umlauf des Pressbands erscheint. Sollte aufgrund dieses Temperaturmusters der Warn-Schwellenwert überschritten werden, wird dennoch kein Warnsignal abgegeben, da keine Prozessstörung vorliegt.

Das Temperaturmuster kann beispielsweise dadurch erkannt werden, dass es genau einmal pro Pressbandumlauf auftritt und/oder die Gestalt des ersetzten Bereichs hat. Das Temperaturmuster wird beispielsweise per Bilderkennung erkannt oder einmalig von Hand als Inhomogenität identifiziert und seine Position aus der Umlaufgeschwindigkeit des Pressbands und der seit dem letzten Auftreten des Temperaturmusters verstrichenen Zeit errechnet.

Im Folgenden wird die Erfindung anhand der beigefügten Zeichnungen näher erläutert. Dabei zeigt
- Figur 1: eine schematische Ansicht einer erfindungsgemäßen Holzwerkstoffplatten-Heißpresse,
- Figur 2: ein Messergebnis der Temperaturmessung mit der Temperaturmessvorrichtung, und
- Figur 3: einen schematischen horizontalen Schnitt durch eine Holzwerkstoffplatten-Heißpresse, deren Aufbau im Wesentlichen dem gemäß Figur 1 entspricht, bei der aber Heizkreise nebeneinander angeordnet sind.

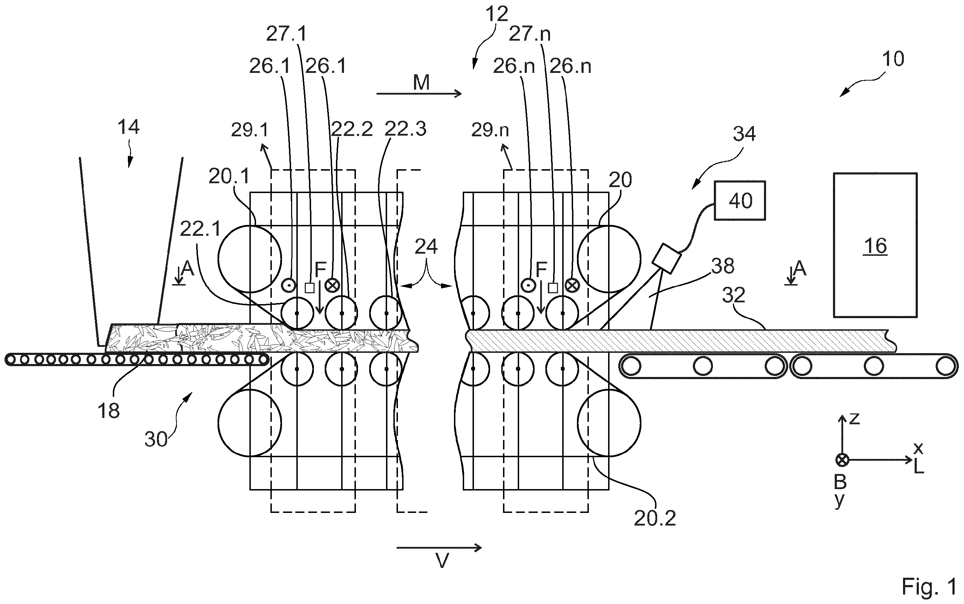

Figur 1 zeigt schematisch eine erfindungsgemäße Holzwerkstoffplatten-Herstellvorrichtung 10, die eine Holzwerkstoffplatten-Heißpresse 12 sowie eine in einer Materialflussrichtung M vor der Holzwerkstoffplatten-Heißpresse 12 angeordnete Streumaschine 14 und eine dahinter angeordnete Sägeanlage 16 aufweist. Die Streumaschine 14 ist ausgebildet zum Streuen eines endlosen Faserkuchens 18 aus beleimten Holzfasern auf ein umlaufendes Förderband.

Die Holzwerkstoffplatten-Heißpresse 12 besitzt ein umlaufendes erstes Pressband 20.1, das, beispielsweise mittels Stangen 22.1, 22.2, ... mit einer Presskraft Fₚ beaufschlagt wird. Das Pressband 20.1 ist aus einem Blech, beispielsweise aus rostfreiem Stahl, gebildet. Die Holzwerkstoffplatten-Heißpresse 12 ist in der Mitte unterbrochen gezeichnet, da eine Vielzahl an Stangen existiert. Der Faserkuchen 18 liegt auf einem zweiten umlaufenden Pressband 20.2, das mit der gleichen Geschwindigkeit umläuft wie das erste Pressband 20.1.

Die Holzwerkstoffplatten-Heißpresse 12 besitzt eine Heizvorrichtung 24, mittels der das Pressband 20 mittels Rohren 26.1, 26.2, ... beheizbar ist. In den Rohren 26 zirkuliert eine Wärmeübertragungsflüssigkeit 28, die von einem nicht eingezeichneten Wärmeerzeuger, beispielsweise einem Kessel, erhitzt wird, der Teil der Heizvorrichtung 24 ist. Die Wärmeübertragungsflüssigkeit 28 gibt die Wärme über Heizplatten und/oder Rollenstäbe an das jeweilige Pressband 20.1, 20.2 ab, von wo es auf den Faserkuchen 18 übertragen wird.

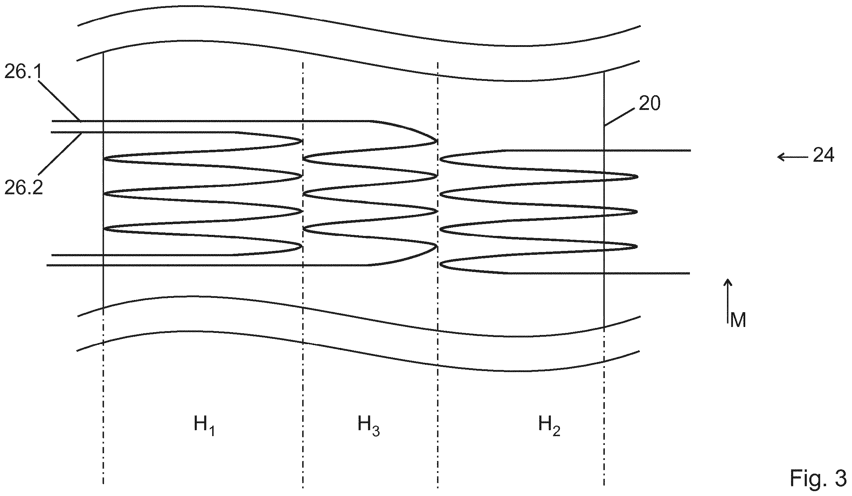

In der vorliegenden Ausführungsform besitzt die Heizvorrichtung 24 mehrere Heizkreise 29.1, ..., 29.n, wobei für n beispielsweise n = 3, 4, 5, 6, 7, 8, oder 9 gilt. Mehr Heizkreise sind möglich. Die Heizkreise 29.i sind ausgebildet zum Beheizen des Faserkuchens 18, im vorliegenden Fall über seine volle Breite, und sind in Materialflussrichtung M hintereinander angeordnet. Alternativ oder zusätzlich ist es aber auch möglich, dass zwei Heizkreise nebeneinander angeordnet sind, wie dies in Figur 3 gezeigt ist.

Die Holzwerkstoffplatten-Heißpresse 12 weist für jeden der Heizkreise 29.1, ..., 29.n zumindest einen Temperaturfühler 27.i (i = 1, ..., n) auf. Im vorliegenden Fall besitzt jeder Heizkreis 29.i je drei Temperaturfühler, jeweils einen für die Ermittlung der Vorlauftemperatur (Temperatur beim Eintritt in den Heizkreis), der Rücklauftemperatur (Temperatur beim Austritt aus dem Heizkreis) und der Temperatur des Pressblechs.

Der Faserkuchen 18 läuft kontinuierlich auf einer Einlaufseite 30 in die kontinuierlich arbeitende Holzwerkstoffplatten-Heißpresse 12 ein und wird dort zur Holzwerkstoffplatte 32 verpresst, die die Holzwerkstoffplatten-Heißpresse 12 an einer Auslaufseite 34 verlässt.

Die Holzwerkstoffplatten-Heißpresse 12 besitzt eine Mehrzahl an Rahmen 35.1, 35.2,..., 35.m, wobei für m beispielsweise m = 35 gilt. Mittels der Rahmen 35.j ist der Pressenspalt im jeweiligen Bereich des Rahmens 35.j an zumindest zwei, vorzugsweise drei oder mehr, Stellen in Breitenrichtung der Holzwerkstoffplatte, also in Höhenrichtung der Holzwerkstoffplatten-Heißpresse 12, einstellbar. So kann beispielsweise in Materialflussrichtung M links eine größere oder kleinere Presskraft und/oder ein kleinerer Pressenspalt eingestellt werden als rechts.

Insbesondere können die Stangen 22.i selbst oder auf die Stangen 22.i eine Presskraft übertragende Bauteile jeweils an einzelnen Rahmen 35.i befestigt sein. Durch eine Lageveränderung eines Rahmens 35.i oder durch Lageveränderung des Bauteils relativ zum Rahmen 35.i kann so die Presskraft verändert werden, die das Pressband 20 auf den Faserkuchen bzw. die entstehende Holzwerkstoffplatte ausübt.

An der Auslaufseite 34 ist eine Temperaturmessvorrichtung 36 in Form einer Infrarot-Kamera angeordnet. Deren Gesichtsfeld 38 erfasst die Holzwerkstoffplatte 32 an der Auslaufseite 34 der Holzwerkstoffplatten-Heißpresse 12.

Die Temperaturmessvorrichtung 36 kann alternativ auch durch eine Mehrzahl an berührungslosen Temperatursensoren gebildet sein, die jeweils bezüglich einer Breitenrichtung B beabstandet voneinander angeordnet sind.

Die Temperaturmessvorrichtung 36 ist mit einer Steuereinheit 40 verbunden, die die Temperaturmessdaten der Temperaturmessvorrichtung 36 auswertet. Im vorliegenden Fall ist die Steuereinheit 40 zudem über nicht eingezeichnete Leitungen mit den Temperaturfühlern 27.i verbunden.

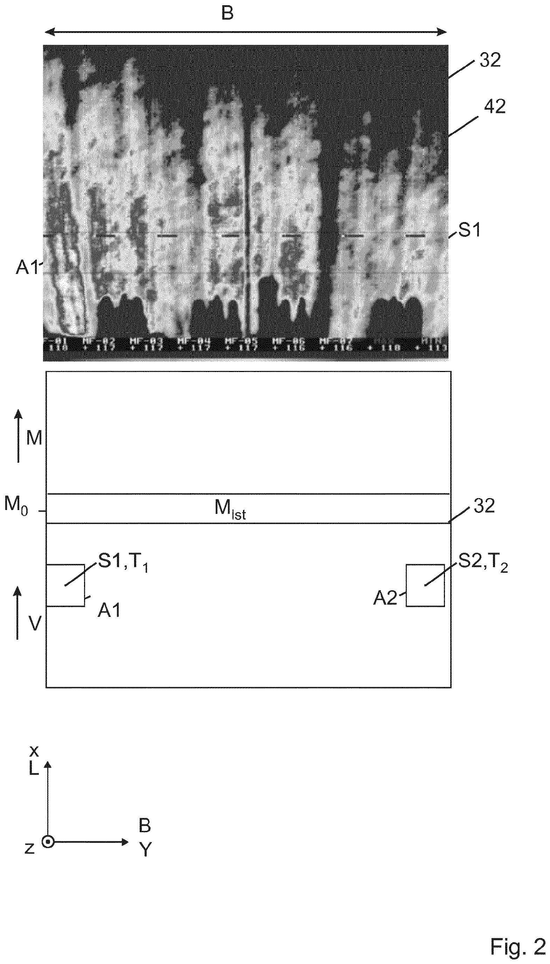

Figur 2 zeigt ein Bild 42, das mit der Temperaturmessvorrichtung 36 aufgenommen wurde. Es ist zu erkennen, dass die Temperatur T = T (x, y) in zwei Raumrichtungen x, y gemessen wird. Die Temperatur T wird an einer Mehrzahl an Punkten (xⱼ, yⱼ) (j = 1, 2,..., N) der Breitenrichtung B der Holzwerkstoffplatte 32 aufgenommen. Dabei gilt vorzugsweise N > 2, insbesondere N > 5, vorzugsweise gilt N< 1000. Im vorliegenden Fall werden zudem mehrere Messwerte für die Temperatur T in einer Längsrichtung L hintereinander aufgenommen. Die in Figur 2 gezeigte Art der Temperaturmessung anhand einer Infrarot-Kamera ist besonders vorteilhaft, da, wie in Figur 2 gezeigt, ein detailliertes Bild der Temperatur T(x, y) der Holzwerkstoffplatte 32 erhalten wird.

Die Steuereinheit 40 (vgl. Fig. 1) erfasst beispielsweise eine erste Seiten-Temperatur T₁, die sich im vorliegenden Fall ergibt als arithmetischer Mittelwert über einen Bereich A1. Die Seiten-Temperatur T₁ ist einer ersten Stelle S1 zugeordnet. Die Stelle S1 ist im vorliegenden Fall der Mittelpunkt des Bereichs A1. Die Stelle S1 befindet sich in einem linken Seitenbereich der Holzwerkstoffplatte 32, wie in dem unteren Teilbild zu erkennen ist, das die gleiche Stelle auf der Holzwerkstoffplatte 32 zeigt und zur besseren Übersicht hinzugefügt wurde.

Es wird zudem eine zweite Seiten-Temperatur T₂ an einer zweiten Stelle S2 bestimmt, die in einem rechten Seitenbereich der Holzwerkstoffplatte 32 liegt. Auch die zweite Temperatur T₂ wird durch Mittelung über einen Pixelbereich der Temperaturmessvorrichtung 36 ermittelt.

Die Steuerung 40 ermittelt einen Ungleichheitsparameter U, der beispielsweise durch die Temperatur U = ΔT = IT₁ - T₂I gebildet sein kann. Überschreitet der Ungleichheitsparameter U einen vorgegebenen Warn-Schwellenwert U_{warn}, so ändert die Steuereinheit 40 einen Prozessparameter P. Bei diesem Prozessparameter P kann es sich beispielsweise um den lokalen Pressdruck p = p (y) handeln, mit dem die Stangen 22.i = 1, 2,... (vgl. Fig. 1) lokal auf das Pressband 20 drücken. Der Prozessparameter P kann zudem eine Heizleistung P_{Heiz} sein, den die Heizvorrichtung 24 auf das Pressband 20 überträgt.

Durch Mittelung über die vollständige Breite B auf einer vorgegebenen Stelle entlang der Materialflussrichtung M, beispielsweise auf der Höhe Mo, kann eine (gemittelte) Ist-Temperatur T_{Ist} ermittelt werden. Weicht diese Ist-Temperatur T_{Ist} von einer vorgegebenen Soll-Temperatur T_{Soll} um mehr als ΔTₒ nach oben oder ΔTᵤ nach unten ab, so kann die Steuereinheit 40 ein entsprechendes Warnsignal ausgeben. Es kann dann ein Maschinenführer eine Vorschubgeschwindigkeit v erhöhen oder vermindern. Alternativ wird das automatisch durchgeführt. Die Vorschubgeschwindigkeit v bezeichnet die Geschwindigkeit, mit der sich die Holzwerkstoffplatte 32 (vgl. Fig. 1) in Materialflussrichtung M im Bereich der Auslaufseite 34 bewegt.

Figur 3 zeigt schematisch einen horizontalen Teil-Querschnitt A-A durch eine erfindungsgemäße Holzwerkstoffplatten-Heißpresse 12, die bis auf die Anordnung der Heizkreise wie die Holzwerkstoffplatten-Heißpresse 12 gemäß Figur 1 aufgebaut ist. Es ist zu erkennen, dass die Heizvorrichtung einen ersten Heizstrang, mit dem ein erster Heizbereich H₁ geheizt werden kann, einen zweiten Heizstrang, mit dem ein zweiter Heizbereich H₂ geheizt werden kann, und einen dritten Heizstrang, mit dem ein dritter Heizbereich H₃ geheizt werden kann, aufweist. Alternativ können zwei oder vier oder mehr Heizbereiche Hᵢ vorhanden sein. Es ist auch möglich, dass pro Heizbereich mehr als ein Heizstrang vorhanden ist. Die Zahl der Heizstränge kann sich für verschiedene Heizbereiche unterscheiden oder gleich sein. Die Heizbereiche sind in Materialflussrichtung M nebeneinander angeordnet und heizen gemeinsam das - Pressband 24 auf voller Breite. Die Temperatur Tᵢ oder der Heizbereich Hᵢ und/oder deren Heizleistung Pᵢ sind unabhängig voneinander einstellbar.

Ein erfindungsgemäßes Verfahren wird beispielsweise durchgeführt, indem die Holzwerkstoffplatten-Heißpresse 12 für zumindest 15 Minuten stillsteht, beispielsweise für Wartungsarbeiten oder für einen Produktwechsel. Es wird dann zunächst weniger Heizleistung zugeführt als durchschnittlich im eingefahrenen Betrieb. Zu Beginn hat die Holzwerkstoffplatte an der auslaufseitigen Seite eine höhere Temperatur als durchschnittlich im eingefahrenen Betrieb. Beispielsweise liegt die über die volle Breite gemittelte Temperatur bei 118 ± 1°C bei beispielsweise einer 7,6 Millimeter dicken Holzwerkstoffplatte. Die Vorschubgeschwindigkeit beträgt im Beispiel v = 510 mm/sec.

Durch die fehlende Wärmezufuhr sinkt die Temperatur der Holzwerkstoffplatte wieder ab - im Beispiel auf 114°C - und es kann ohne Temperaturkontrolle zu kritischen Temperaturunterschreitungen kommen, die in Spaltern - und damit Ausschuss - resultieren. Die Vorschubgeschwindigkeit wird im Beispiel deshalb vorzugsweise automatisch auf v = 445 mm/sec abgesenkt. Die Vorlauftemperatur der Presse und die Heizplattentemperatur nehmen zu, die Plattenoberflächentemperatur jedoch noch nicht.

Mit steigender Plattentemperatur wird die Vorschubgeschwindigkeit - insbesondere automatisch - erhöht, sodass die über die volle Breite gemittelte Temperatur die Soll-Temperatur T_{Soll} 124 ± 1°C annimmt und die Vorschubgeschwindigkeit ihren maximal erreichbaren Wert oder einen Soll-Wert von beispielsweise v = 530 mm/sec erreicht hat. Das dauert oft bis zu 30 Minuten.

Ein erfindungsgemäßes Verfahren wird auch durchgeführt, indem zunächst die Plattendicke der Holzwerkstoffplatte geändert wird. Bei unterschiedlichen Plattendicken sind unterschiedliche Presstemperaturen und verschiedene Oberflächentemperaturen notwendig. Beispielsweise beträgt die über die volle Breite gemittelte Temperatur bei einer 12 Millimeter Plattendicke 126 ± 1°C und bei 5,5 Millimeter Plattendicke 110 ± 1°C. Somit muss die Heizleistung der Presse an die neue Produktion angepasst werden. Je nach Situation ist die notwendige Heizleistung jedoch nur grob abschätzbar.

Es wird daher beim Herstellen der Holzwerkstoffplatte mit der geringeren oder größeren Plattendicke zunächst bei laufender Produktion die Heizleistung und/oder die Vorschubgeschwindigkeit so geändert, dass die über die volle Breite gemittelte Temperatur sukzessive um 5 bis 7°C abgesenkt wird. Danach wird die Plattendicke geändert. Mittels der über die volle Breite gemittelten Temperatur wird die Vorschubgeschwindigkeit v vorgewählt und dann anhand der Temperatur die Vorschubgeschwindigkeit v und die Heizleistungen P der einzelnen Heizkreise geregelt.

Im Rahmen eines erfindungsgemäßen Verfahrens wird vorzugsweise automatisch von der Steuereinheit 40, die aus mehreren räumlich voneinander getrennten Einheiten bestehen kann, ein Ungleichheitsparameter U in Form einer maximalen Differenz ΔT_{B} berechnet. Dazu werden die Temperaturmesswerte T(y) zunächst in zumindest fünf, insbesondere zumindest zehn - vorzugsweise äquidistante - Auswertebereiche Aⱼ gruppiert. Ein Auswertbereich ist beispielsweise ein zweidimensionales Intervall.

Die Auswertebereiche Aⱼ bilden vorzugsweise im mathematischen Sinne eine Partition der Messwerte über zumindest 80%, insbesondere zumindest 90%, der vollen Breite der Holzwerkstoffplatte. Es ist aber auch möglich, dass die Gesamtheit aller Auswertebereiche nicht die gesamte Breite der Holzwerkstoffplatte erfasst, sondern beispielsweise zumindest 50%, zumindest 60%, zumindest 70% oder zumindest 80%.

Nachfolgend wird der Mittelwert der Temperatur innerhalb jedes Auswertebereichs Aⱼ berechnet. Aus den so erhaltenen Auswertebereich-Temperaturen wird die maximalen Differenz ΔT_{B} als Ungleichheitsparameter U berechnet.

Überschreitet der Ungleichheitsparameter U einen vorgegebenen Warn-Schwellenwert von beispielsweise U_{warn} = 3°C, können vermehrt quer zur Materialflussrichtung Unterschiede in der Plattenqualität auftreten. Dem wird dadurch entgegengewirkt, dass ein Pressdruck p an auf der kälteren Seite erhöht wird.

So kann beispielsweise mittels eines Druckausgleichs von 20% - 50% des vorhandenen spezifischen Pressdrucks in einem in Materialflussrichtung hinteren Hochdruckbereich der kontinuierlichen Presse der Ungleichheitsparameter U von 4°C auf 1°C gesenkt werden.

Wird beispielsweise bei der Herstellung einer Holzwerkstoffplatte mit 5,5 Millimeter Plattendicke ein Ungleichheitsparameter von U = 4°C gemessen, wobei die höhere Temperatur im in Materialflussrichtung rechten Bereich der Holzwerkstoffplatte ist und wobei sich die übrigen Auswertebereich-Temperaturen um weniger als 1°C unterscheiden, so wird im rechten Bereich, insbesondere dem rechten Hochdruckbereich, der Heißpresse der Pressdruck 35% erhöht. Damit wird der Ungleichheitsparameter U auf unter 1°C gesenkt.

Im Rahmen eines erfindungsgemäßen Verfahrens wird vorzugsweise der Verfahrensparameter in Form der Gesamt-Heizleistung P_{Heiz, gesamt} und/oder eine Heizleistung eines, zweier oder mehrerer Heizkreise 29.j erhöht, wenn die gemittelte Temperatur der Holzwerkstoffplatte von der vorgegebenen Soll-Temperatur nach unten abweicht. Das gilt insbesondere dann, wenn eine Vorschubgeschwindigkeit eine vorgegebene Maximal-Geschwindigkeit vₘₐₓ hat.

Beispielsweise beträgt bei einer Plattendicke von 7,6 ± 0,5 Millimeter die Soll-Temperatur T_{Soll} = 123 ± 1°C und es gilt v = vₘₐₓ = 540 mm/sec. Liegt nun beispielsweise die über die volle Breite der Holzwerkstoffplatte gemittelte Temperatur bei 118°C, so wird die Gesamt-Heizleistung P_{Heiz, gesamt}, vorzugsweise durch Erhöhen der Vorlauftemperatur, erhöht. Im vorliegenden Beispiel wird die Vorlauftemperatur T_{in,j} für zumindest einen Heizkreis 29.j, vorzugsweise aber für zwei oder mehr Heizkreise, um beispielsweise 2°C erhöht. Daraufhin nähert sich die Temperatur so der Soll-Temperatur an, dass der Ungleichheitsparameter U unter den Warn-Schwellenwert fällt. Die angegebenen Schritte können automatisch durchgeführt werden, ohne dass eine Person ein Warnsignal erhält.

**Bezugszeichenliste**

| | | | |
|---|---|---|---|
| 10 | Holzwerkstoffplatten-Herstellvorrichtung | A | Bereich |
| 12 | Holzwerkstoffplatten-Heiß-presse | B | Breitenrichtung |
| | | d | Dicke |
| 14 | Streumaschine | Fₚ | Presskraft |
| 16 | Sägeanlage | i, j | Zählindices |
| 18 | Faserkuchen | L | Längsrichtung |
| | | M | Materialflussrichtung |
| 20 | Pressband | | |
| 22 | Stange | p | Druck |
| 24 | Heizvorrichtung | P | Prozessparameter |
| 26 | Rohr | P_{Heiz} | Heizleistung |
| 27 | Temperaturfühler | S | Stelle |
| 28 | Wärmeübertragungsflüssigkeit | t | Zeitverzögerung |
| 29 | Heizkreis | T | Temperatur |
| | | T₁ | erste Seiten-Temperatur |
| 30 | Einlaufseite | T_{Ist} | Ist-Temperatur |
| 32 | Holzwerkstoffplatte | T_{Soll} | Soll-Temperatur |
| 34 | Auslaufseite | ΔTₒ | erste Differenztemperatur |
| 35 | Rahmen | ΔTᵤ | zweite Differenztemperatur |
| 36 | Temperaturmessvorrichtung | ΔT_{g} | ΔT_{g} = Tₘₐₓ - Tₘᵢₙ |
| 38 | Gesichtsfeld | U | Ungleichheitsparameter |
| | | U_{Warn} | Warn-Schwellenwert |
| 40 | Steuereinheit | v | Vorschubgeschwindigkeit |
| 42 | Bild | | |

## Patentansprüche

1. Holzwerkstoffplatten-Heißpresse zum Herstellen einer Holzwerkstoffplatte (32) aus einem Faserkuchen, wobei die Holzwerkstoffplatten-Heißpresse (12)
(a) eine Einlaufseite (30) und eine Auslaufseite (34) hat und
(b) ausgebildet ist zum Pressen eines an der Einlaufseite (30) zuführbaren Faserkuchens (18) zur Holzwerkstoffplatte (32),
(c) eine Temperaturmessvorrichtung (36), die
- ausgebildet ist zum automatischen ortsaufgelösten Messen der Temperatur (T) der Holzwerkstoffplatte (32) an der Auslaufseite (34) aufweist und
- eine Infrarotkamera umfasst, und
(d) eine Steuereinheit (40) aufweist,
**dadurch gekennzeichnet, dass**
(e) die eine Steuereinheit (40) ausgebildet ist zum automatischen Durchführen eines Verfahrens mit den Schritten:
(i) Erfassen einer ersten Seiten-Temperatur (T₁) einer ersten Stelle (S₁) in einem linken Seitenbereich der Holzwerkstoffplatte (32),
(ii) Erfassen einer zweiten Seiten-Temperatur (T₂) einer zweiten Stelle (S₂) in einem rechten Seitenbereich der Holzwerkstoffplatte (32), und
(iii) Regeln zumindest eines Prozessparameters (P) der Holzwerkstoffplatten-Heißpresse (12), sodass sich die erste Seiten-Temperatur (T₁) der zweiten Seiten-Temperatur (T₂) annähert,
(iv) wobei das Regeln des Prozessparameters (P) ein Erhöhen eines Pressdrucks (p) auf der Seite der niedrigeren Temperatur (T) und/oder ein Erniedrigen des Pressdrucks (p) auf der Seite der höheren Temperatur umfasst.

2. Holzwerkstoffplatten-Heißpresse nach Anspruch 1, **dadurch gekennzeichnet, dass** das Verfahren die folgenden Schritte umfasst:
(a) Vergleichen einer mittels der Temperaturmessvorrichtung (36) gemessenen Ist-Temperatur (T_{Ist}) mit einer vorgegebenen Soll-Temperatur (T_{Soll}) und
(b) Erhöhen einer Vorschubgeschwindigkeit (v) des Faserkuchens (18), wenn die Ist-Temperatur (Tᵢₛₜ) um eine vorgegebene Differenztemperatur ΔTᵤ oberhalb der Soll-Temperatur (T_{Soll}) liegt und/oder Senken der Vorschubgeschwindigkeit (v), wenn die Ist-Temperatur (T_{Ist}) um eine vorgegebene zweite Differenztemperatur ΔTᵤ unterhalb der Soll-Temperatur (T_{Soll}) liegt.

3. Holzwerkstoffplatten-Heißpresse nach einem der vorstehenden Ansprüche, **dadurch gekennzeichnet, dass** sie zum Herstellen einer Holzwerkstoffplatte (32) mit einer Dicke (d) von höchstens 12 Millimeter ausgebildet ist.

4. Holzwerkstoffplatten-Herstellvorrichtung (10) mit
(a) einer Holzwerkstoffplatten-Heißpresse (12) nach einem der vorstehenden Ansprüche und
(b) einer in Materialflussrichtung (M) hinter der Holzwerkstoffplatten-Heißpresse (12) angeordneten Säge- und/oder Besäumanlage (16).

5. **Verfahren** zum Betreiben einer Holzwerkstoffplatten-Heißpresse (12), die
(a) eine Einlaufseite (30) und eine Auslaufseite (34) hat und
(b) einen von der Einlaufseite (30) zugeführten Faserkuchen (18) zur Holzwerkstoffplatte (32) verpresst,
mit den Schritten:
(i) automatisches, berührungsloses, ortsaufgelöstes Messen der Temperatur (T) der Holzwerkstoffplatte (32) an der Auslaufseite (34) und
(ii) Erfassen einer ersten Seiten-Temperatur (T₁) einer ersten Stelle (S1) in einem linken Seitenbereich der Holzwerkstoffplatte (32),
(iii) Erfassen einer zweiten Seiten-Temperatur (T₂) an einer zweiten Stelle (S2) in einem rechten Seitenbereich der Holzwerkstoffplatte (32), und
(iv) Regeln zumindest eines Prozessparameters (P) der Holzwerkstoffplatten-Heißpresse (12) anhand der Temperatur (T), sodass sich die erste Seiten-Temperatur (T₁) der zweiten Seiten-Temperatur (T₂) annähert, wobei das Regeln ein Erhöhen eines Pressdrucks auf der Seite der niedrigen Temperatur umfasst.

6. Verfahren nach Anspruch 5, **gekennzeichnet durch** die Schritte:
(a) Berechnen eines Ungleichheitsparameters (U), insbesondere einer Differenz ΔT₉ zwischen einer Maximal-Temperatur (Tₘₐₓ) und einer Minimal-Temperatur (Tₘᵢₙ) der Holzwerkstoffplatte (32), und
(b) Ausgeben eines Warnsignals, wenn der Ungleichheitsparameter (U) einen vorgegebenen Warn-Schwellenwert (U_{warn}) überschreitet.

7. Verfahren nach Anspruch 5 oder 6, **gekennzeichnet durch** die Schritte:
(i) Erfassen einer Inhomogenität des Pressbands und
(ii) Unterdrücken des Ausgebens des Warnsignals, wenn der Warn-Schwellenwert aufgrund der Inhomogenität überschritten wird.

## Claims

1. A wood-based board hot press for producing a wood-based board (32), wherein the wood-based board hot press (12) has
(a) an inlet side (30) and an outlet side (34), and
(b) is designed to press a fiber cake (18) supplied on the inlet side (30) in order to form a wood-based board (32),
(c) a temperature measurement device (36) which
- is designed for the automatic, contactless, time-resolved measurement of the temperature (T) of the wood-based board (32) on the outlet side (34) and
- comprises an infrared camera and
(d) an control unit (40),
**characterized in that**
(e) the control unit (40) is configured to automatically execute a method featuring the steps:
(i) detecting a first lateral temperature (T₁) of a first point (S₁) in a left-hand lateral area of the wood-based board (32),
(ii) detecting a second lateral temperature (T₂) of a second point (S₂) in a right-hand lateral area of the wood-based board (32), and
(iii) adjusting at least one process parameter (P) of the wood-based board hot press (12) such that the first lateral temperature (T₁) approaches the second lateral temperature (T₂),
(iv) wherein the adjustment of the process parameter (P) comprises an increase in a press force (p) on the side of the lower temperature (T) and/or a reduction in the press force (p) on the side of the higher temperature.

2. The wood-based board hot press according claim 1, **characterized in that** the method comprises the following steps:
(a) comparing an actual temperature (Tᵢₛₜ) measured using the temperature measurement device (36) with a predetermined target temperature (T_{Soll}) and
(b) increasing a feed speed (v) of the fiber cake (18) if the actual temperature (Tᵢₛₜ) lies above the target temperature (T_{Soll}) by a predetermined differential temperature ΔTᵤ and/or
decreasing the feed speed (v) if the actual temperature (Tᵢₛₜ) lies below the target temperature (Tₛₒₗₗ) by a predetermined second differential temperature ΔTᵤ.

3. The wood-based board hot press according to one of the above claims, **characterized in that** is it designed to produce a wood-based board (32) with a maximum thickness (d) of 12 millimeters.

4. The wood-based board production device (10) with
(a) a wood-based board hot press (12) according to one of the preceding claims and
(b) a saw and/or trimming system (16) arranged behind the wood-based board hot press (12) in the direction of material flow (M).

5. **A method** for operating a wood-based board hot press (12) which
(a) has an inlet side (30) and an outlet side (34), and
(b) presses a fiber cake (18) supplied from the inlet side (30) to produce a wood-based board (32),
featuring the steps:
(i) automatic, contactless, time-resolved measurement of the temperature (T) of the wood-based board (32) on the outlet side (34) and
(ii) detecting a first lateral temperature (T₁) of a first point (S1) in a left-hand lateral area of the wood-based board (32),
(iii) detecting a second lateral temperature (T₂) of a second point (S2) in a right-hand lateral area of the wood-based board (32), and
(iv) adjusting the at least one process parameter (P) of the wood-based board hot press (12) by way of the temperature (T), so that the first lateral temperature (T₁) approaches the second temperature (T₂), the adjustment comprising an increase in a press force on the side of the lower temperature.

6. The method according to claim 5, **characterized by** the steps:
(a) calculating a discrepancy parameter (U), especially a difference ΔT₉ between a maximum temperature (Tₘₐₓ) and a minimum temperature (Tₘᵢₙ) of the wood-based board (32), and
(b) emitting a warning signal if the discrepancy parameter (U) exceeds a predetermined warning threshold value (U_{warn}).

7. The method according to claim 5 or 6, **characterized by** the steps:
(i) detecting an inhomogeneity of the press belt and
(ii) suppressing the emission of the warning signal if the warning threshold value is exceeded due to the inhomogeneity.

## Revendications

1. Presse à chaud pour panneaux en matériau à base de bois, destinée à fabriquer un panneau en matériau à base de bois (32) à partir d'un gâteau de fibres, où la presse à chaud (12) pour panneaux en matériau à base de bois
(a) comprend un côté entrée (30) et un côté sortie (34) et
(b) est réalisée pour presser un gâteau de fibres (18), susceptible d'être amené au niveau du côté entrée (30), pour donner le panneau en matériau à base de bois (32),
(c) comprend un dispositif de mesure de température (36) qui
- est réalisé pour mesurer automatiquement, avec résolution locale, la température (T) du panneau en matériau à base de bois (32) sur le côté sortie (34), et
- comprend une caméra infrarouge, et
(d) comprend une unité de commande (40),
**caractérisée en ce que**
(e) ladite unité de commande (40) est réalisée pour exécuter automatiquement un procédé comprenant les étapes consistant à :
(i) détecter une première température latérale (T₁) d'un premier emplacement (S₁) dans une zone latérale gauche du panneau en matériau à base de bois (32),
(ii) détecter une deuxième température latérale (T₂) d'un deuxième emplacement (S₂) dans une zone latérale droite du panneau en matériau à base de bois (32), et
(iii) réguler au moins un paramètre de processus (P) de la presse à chaud (12) pour panneaux en matériau à base de bois, de sorte que la première température latérale (T₁) se rapproche de la deuxième température latérale (T₂),
(iv) la régulation du paramètre de processus (P) consistant à augmenter une pression de pressage (p) du côté de la température plus basse (T) et/ou à abaisser la pression de pressage (p) du côté de la température plus élevée.

2. Presse à chaud pour panneaux en matériau à base de bois selon la revendication 1, **caractérisée en ce que** le procédé comprend les étapes suivantes consistant à :
(a) comparer une température réelle (T_{réelle}), mesurée au moyen du dispositif de mesure de température (36), à une température de consigne (T_{consigne}) prédéterminée, et
(b) augmenter une vitesse d'avance (v) du gâteau de fibres (18) lorsque la température réelle (T_{réelle}) est supérieure à la température de consigne (Tconsigne) d'une température différentielle prédéterminée ΔTᵤ, et/ou
abaisser la vitesse d'avance (v) lorsque la température réelle (T_{réelle}) est inférieure à la température de consigne (_{Tconsigne}) d'une deuxième température différentielle prédéterminée ΔTᵤ.

3. Presse à chaud pour panneaux en matériau à base de bois selon l'une des revendications précédentes,**caractérisée en ce qu'**elle est réalisée pour fabriquer un panneau en matériau à base de bois (32) d'une épaisseur (d) de 12 millimètres au maximum.

4. Dispositif (10) de fabrication de panneaux en matériau à base de bois, comprenant
(a) une presse à chaud (12) pour panneaux en matériau à base de bois selon l'une des revendications précédentes, et
(b) une installation de sciage et/ou de délignage (16) disposée en aval de la presse à chaud (12) pour panneaux en matériau à base de bois dans le sens du flux de matière (M).

5. Procédé pour faire fonctionner une presse à chaud (12) pour panneaux en matériau à base de bois, qui
(a) comprend un côté entrée (30) et un côté sortie (34), et
(b) vient presser un gâteau de fibres (18), amené par le côté entrée (30), pour donner le panneau en matériau à base de bois (32), comprenant les étapes consistant à :
(i) mesurer automatiquement, sans contact, et avec résolution locale, la température (T) du panneau en matériau à base de bois (32) sur le côté sortie (34), et
(ii) détecter une première température latérale (T₁) d'un premier emplacement (S₁) dans une zone latérale gauche du panneau en matériau à base de bois (32),
(iii) détecter une deuxième température latérale (T₂) d'un deuxième emplacement (S₂) dans une zone latérale droite du panneau en matériau à base de bois (32), et
(iv) réguler au moins un paramètre de processus (P) de la presse à chaud (12) pour panneaux en matériau à base de bois en se basant sur la température (T), de sorte que la première température latérale (T₁) se rapproche de la deuxième température latérale (T₂), la régulation consistant à augmenter une pression de pressage du côté de la température basse.

6. Procédé selon la revendication 5, **caractérisé par** les étapes consistant à :
(a) calculer un paramètre d'inégalité (U), en particulier une différence ΔT₉ entre une température maximale (Tₘₐₓ) et une température minimale (Tₘᵢₙ) du panneau en matériau à base de bois (32), et
(b) émettre un signal d'alerte si le paramètre d'inégalité (U) dépasse un seuil d'alerte prédéterminé (Uₐₗₑᵣₜₑ).

7. Procédé selon la revendication 5 ou 6, **caractérisé par** les étapes consistant à :
(i) détecter une inhomogénéité de la bande de presse, et
(ii) supprimer l'émission du signal d'alerte si le seuil d'alerte est dépassé en raison de l'inhomogénéité.
